# EUROPEAN PATENT APPLICATION

(11) **EP 4 815 097 A1**
(43) Date of publication of application: **30.09.2026**
(21) Application number: 24894629.5
(22) Date of filing: 21.11.2024
(51) Int. Cl.: H01M 10/42, A62C 3/16, A62C 35/10, A62C 31/28, H01M 50/204, H01M 50/317, H01M 50/249, H01M 50/342

(54) **BATTERY STORAGE CONTAINER**

(30) Priority: 21.11.2023 KR 20230161735; 31.01.2024 KR 20240014732; 31.01.2024 KR 20240014736; 08.02.2024 KR 20240019524
(71) Applicant: JS E&L Corporation, Gyeongsangbuk-do 38205 (KR)
(72) Inventor: RYU, Jaemoon, Ulsan 44213 (KR)
(74) Representative: Mewburn Ellis LLP
(86) International application number: PCT/KR2024/018448
(87) International publication number: WO 2025/110737

(57) **Abstract**

A battery storage container according to the present invention comprises a cover part having a first space formed therein, a main body part having a second space formed therein for accommodating a battery, which is coupled to the cover part to form a sealed space in which the first space and the second space are combined, and a discharge part for releasing a fire extinguishing agent into the sealed space at a predetermined temperature, wherein the discharge part is formed in the shape of a rope elongated in one direction and is provided along the perimeter of the sealed space.

## Description

### [Technical Field]

The present invention relates to a battery storage container, and more specifically, to a battery storage container capable of mitigating the risk of fire or explosion caused by thermal runaway of batteries.

### [Background Art]

The automotive industry is accelerating its shift toward electric vehicles. Among these, the market size for rechargeable batteries used in electric vehicles-a core component-is projected to reach $616 billion by 2035, and production volumes at companies involved in rechargeable batteries are also increasing by approximately 5 to 6 times.

Among the aforementioned rechargeable batteries, lithium-ion batteries rapidly reach extremely high temperatures in the event of a fire. Additionally, there is a risk of explosion if gases accumulate inside the container due to the fire. Furthermore, once a fire occurs, chemical reactions within the battery continuously generate oxygen as the fire progresses, making it difficult to extinguish the fire using conventional methods.

Therefore, there is an urgent need to develop battery storage containers that can mitigate the risk of fire or explosion caused by thermal runaway, and methods to address these issues are required.

### [Summary of the Invention]

### [Technical Problem]

The present invention was conceived to solve the problems of the prior art described above. The objective of the present invention is to provide a battery storage container capable of mitigating the risk of fire or explosion caused by thermal runaway of the battery through a discharge part formed along the perimeter of a sealed space containing the battery, wherein the container is shaped like a long rope extending in one direction.

Furthermore, the present invention was conceived to solve the problems of the prior art described above. The objective of the present invention is to provide a battery storage container capable of mitigating the risk of fire or explosion caused by thermal runaway of the battery through a discharge part provided in the form of a patch on one side of the sealed space housing the battery.

Furthermore, the present invention is an invention devised to solve the problems of the prior art described above. The present invention aims to provide a battery storage container that includes a sealing part sealing the space between the cover part and the main body part, wherein the sealing part is configured such that internal air is discharged to the outside through a region of the sealing part.

Furthermore, the present invention is an invention devised to solve the problems of the prior art described above, and the objective of the present invention is to provide a battery storage container that is arranged to communicate with a main body part for accommodating a battery therein, thereby discharging the internal air of the main body part to the outside, which can mitigate the risk of fire or explosion caused by thermal runaway of the battery.

The objectives of the present invention are not limited to those mentioned above, and other objectives not mentioned herein will be clearly understood by those skilled in the art from the following description.

### [Technical Solution]

The battery storage container of the present invention comprises: a cover part having a first space formed therein; a main body part having a second space formed therein for accommodating a battery, which is coupled to the cover part to form a sealed space in which the first space and the second space are combined; and a discharge part that releases a fire extinguishing agent into the sealed space at a predetermined temperature, wherein the discharge part may be formed in the shape of a long rope extending in one direction and arranged along the perimeter of the sealed space, or may be fixed in the form of a patch on at least one surface of the sealed space.

A battery storage container according to an embodiment of the present invention for achieving the aforementioned objectives, wherein, when the discharge part is formed in the shape of a rope elongated in one direction and arranged along the perimeter of the sealed space, the discharge part may be arranged along the inner perimeter of the sealed space at a predetermined height from a bottom surface of the sealed space.

In this case, the predetermined height may be at least the height from the bottom surface of the second space in the main body part to the uppermost surface of the battery seated in the second space, and may be less than or equal to the maximum height of the second space in the main body part.

Furthermore, the discharge part may comprise a plurality of unit members arranged at regular intervals on the inner surface of the main body part along the perimeter thereof.

Furthermore, when the discharge part is formed in the shape of a rope elongated in one direction and is provided along the perimeter of the sealed space, at least one discharge part is provided on the bottom surface of the main body part so that the fire extinguishing agent is discharged toward the battery housed in the main body part.

Furthermore, when the discharge part is formed in the shape of a rope elongated in one direction and is arranged along the perimeter of the sealed space, at least one of the discharge part may be provided on one side of the first space of the cover part so that the fire extinguishing agent is discharged toward the battery housed in the second space.

Furthermore, the discharge part may be arranged at regular intervals on the bottom surface of the first space, which faces the top surface of the battery housed in the main body part.

Furthermore, the discharge part may be provided along the perimeter of the inner surface of the cover part.

Furthermore, when the discharge part is formed in the shape of a rope elongated in one direction and arranged along the perimeter of the sealed space, the discharge part is formed as a flexible rope, and a receiving member having micro-holes formed on its outer surface; and a fire extinguishing agent that is contained in a solid state within the receiving member and is released into the sealed space through the micro-holes when the sealed space reaches a predetermined temperature.

Furthermore, the discharge part may further include a fixing member for securing the receiving member to a predetermined position within the sealed space.

In this case, the fixing member may have a plurality of through holes formed in the longitudinal direction through which the fire extinguishing agent released from the receiving member travels.

Meanwhile, in another embodiment of the present invention for achieving the aforementioned objectives, when the discharge part is fixed in a patch-like form to at least one surface of the sealed space, the discharge part may be configured such that its bottom surface is fixed to a surface of the sealed space at a predetermined gap between a planar upper surface of the discharge part and a surface of the battery facing the upper surface of the discharge part .

Furthermore, the discharge part may include a receiving member having a facing surface that is planar and faces the battery, with micro-holes formed on the outer surface including said facing surface; and a fire extinguishing agent that is contained in a solid state within the receiving member and is discharged into the sealed space through the micro-holes when the sealed space reaches a predetermined temperature.

In this case, the preset interval may be determined based on the discharge distance and discharge time of the fire extinguishing agent so that the discharged fire extinguishing agent can envelop the entire surface of the battery.

Meanwhile, in a battery storage container according to another embodiment of the present invention for achieving the aforementioned objectives, the cover part is configured as a rectangular shape, and the battery storage container further comprises a sealing part that seals between the cover part and the main body part, wherein the sealing part discharges internal air to the outside at a portion thereof.

In this case, the sealing part may include a packing member provided between the cover part and the main body part; and a vent member in which a flow path narrowing in width in one direction is formed between portions of the packing member.

Furthermore, the vent member is configured to open according to a predetermined condition while at least one of an inlet and an outlet is sealed, wherein the predetermined conditions may be the internal pressure of the main body part in which the battery is housed.

Meanwhile, in a battery storage container according to another embodiment of the present invention for achieving the aforementioned objectives, the cover part is configured as a rectangular shape and may further include a vent part arranged to communicate with the main body part to discharge the internal air of the main body part to the outside.

In this case, the vent part may include a body formed elongated in one direction, with one side facing the main body part; and a vent channel penetrating the body diagonally relative to the length direction of the body.

Furthermore, the vent channel communicates with an exhaust hole formed in the main body part from the side of the body facing the main body part; wherein the internal air of the main body part may flow into an inlet formed on a first surface of the body facing the main body part and be discharged through an outlet formed on a second surface of the body, which is different from the first surface.

### [Effect of the Invention]

The battery storage container of the present invention, designed to solve the aforementioned problems, has the effect of reducing the risk of fire or explosion caused by thermal runaway of the battery.

The effects of the present invention are not limited to those mentioned above, and other effects not mentioned herein will be clearly understood by those skilled in the art from the description of the claims.

### [Brief Description of the Drawings]

Figures 1 and 2 are drawings illustrating the configuration of the battery storage container according to an embodiment of the present invention;
Fig. 3 is a drawing illustrating the installation location of the discharge part of the battery storage container according to an embodiment of the present invention;
Fig. 4 is a drawing illustrating a variant arrangement of the discharge part in a battery storage container according to an embodiment of the present invention;
Figure 5 is a drawing illustrating another variant of the arrangement of the discharge part in the battery storage container according to an embodiment of the present invention;
Figure 6 is a drawing illustrating the configuration of the discharge part in a battery storage container according to an embodiment of the present invention;
Figure 7 is a drawing illustrating the receiving member for the discharge part in a battery storage container according to an embodiment of the present invention;
Figure 8 is a drawing illustrating an attachment member moving along a rail provided on the receiving member of the discharge part in a battery storage container according to an embodiment of the present invention;
Figure 9 is a drawing illustrating a modified example in which the receiving member of the discharge part in the battery storage container according to an embodiment of the present invention is divided into a duct and a cover;
Figure 10 is a drawing illustrating through holes formed at different angles relative to the upper surface in the cover of Figure 9;
Figure 11 is a drawing illustrating a modified example of a fixing member provided in a shape corresponding to the attachment surface in the discharge part of a battery storage container according to an embodiment of the present invention;
Figure 12 is a drawing illustrating a storage member located on the bottom surface of the battery in the discharge part of a battery storage container according to an embodiment of the present invention;
Figure 13 is a drawing illustrating the discharge part of a battery storage container according to another embodiment of the present invention;
Figure 14 is a drawing illustrating an example of a battery accommodated in the main body part of a battery storage container according to another embodiment of the present invention;
Figure 15 is a drawing illustrating a modified example of the discharge part of a battery storage container according to another embodiment of the present invention;
Figures 16 and 17 are drawings illustrating the spacing of the discharge parts relative to the battery in a battery storage container according to another embodiment of the present invention;
Figure 18 is a drawing illustrating the storage section of a battery storage container according to another embodiment of the present invention;
Figure 19 is a view showing the overall appearance of a battery storage container according to another embodiment of the present invention;
Figure 20 is a drawing illustrating the assembly of a battery storage container according to another embodiment of the present invention;
Figure 21 is a drawing illustrating the configuration of the sealing part in a battery storage container according to another embodiment of the present invention;
Figure 22 is a view illustrating a battery storage container according to another embodiment of the present invention, in which a vent member is provided between portions of the packing member;
Figure 23 is a view illustrating the overall appearance of a battery storage container according to another embodiment of the present invention;
Figure 24 is a drawing illustrating the side view of a battery storage container according to another embodiment of the present invention;
Figure 25 is a drawing illustrating the vent part of a battery storage container according to another embodiment of the present invention.

### [Embodiments of the Invention]

The following description provides a detailed explanation of the embodiments of the present invention with reference to the attached drawings, so that a person skilled in the art to which the present invention pertains may readily practice the invention.

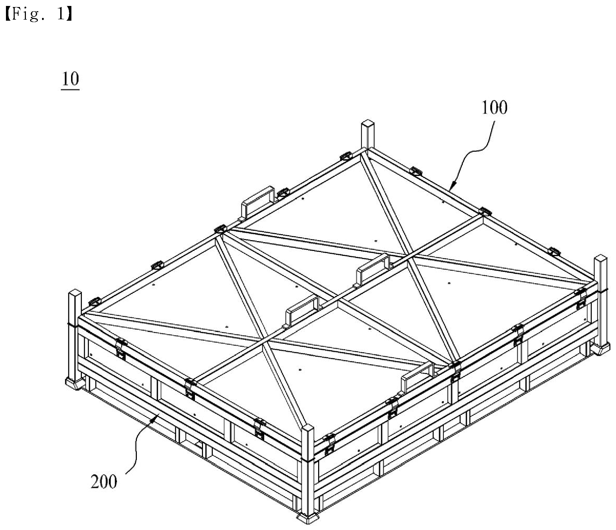

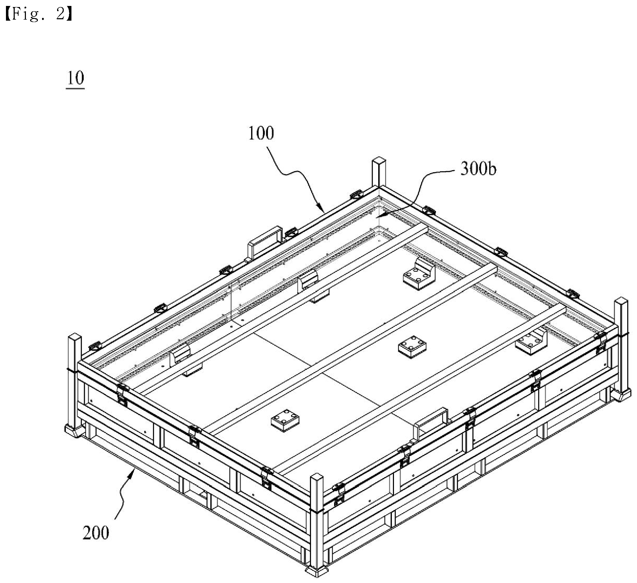

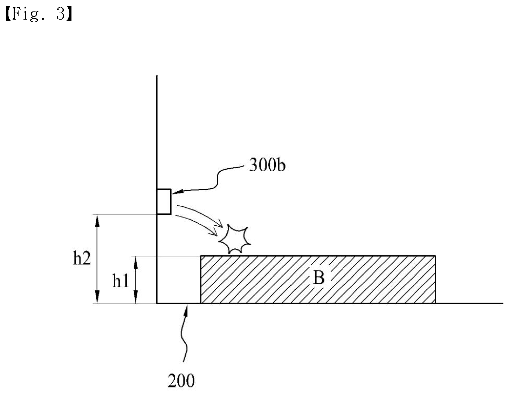

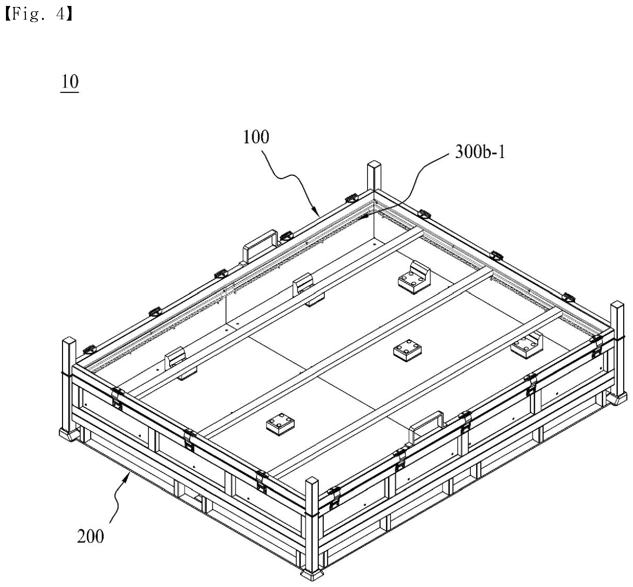

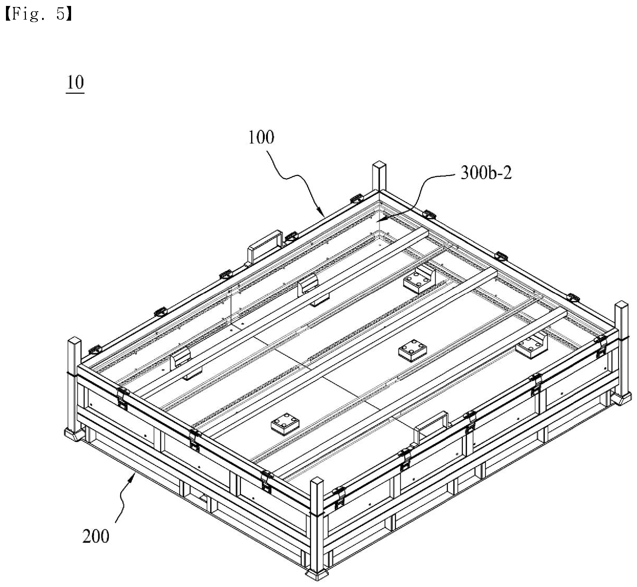

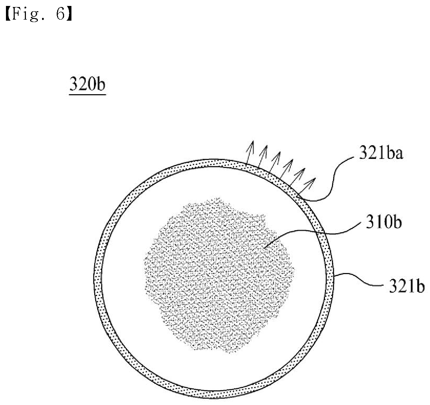

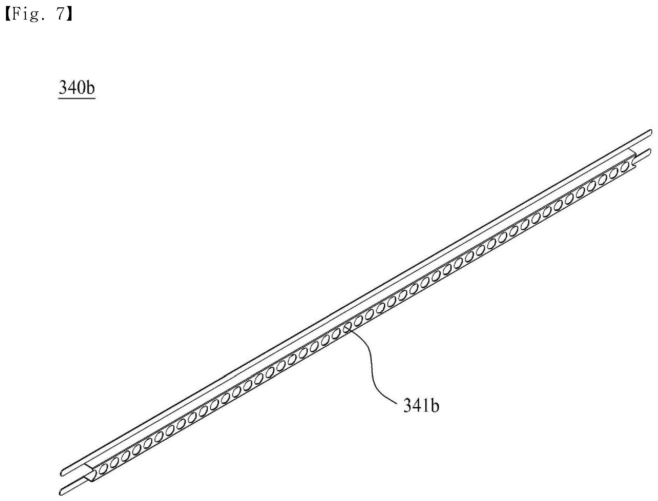

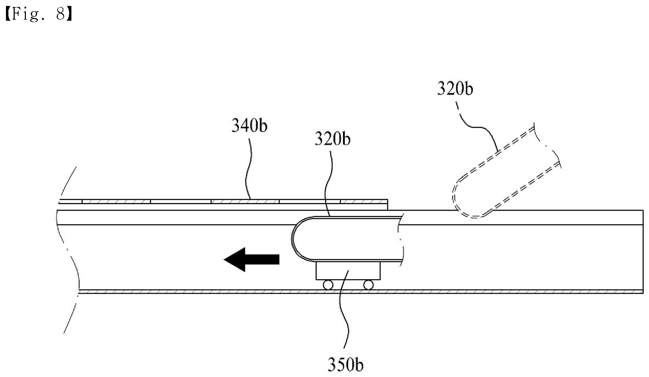

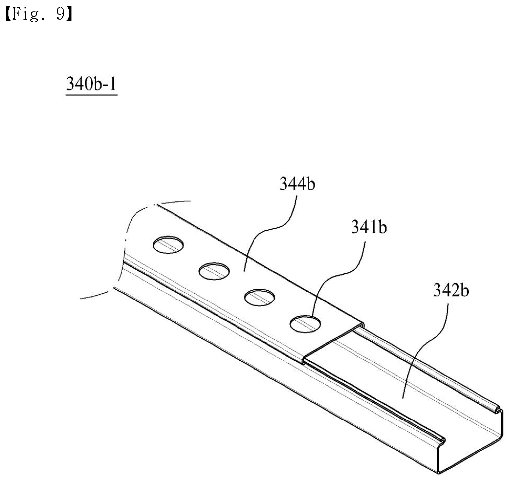

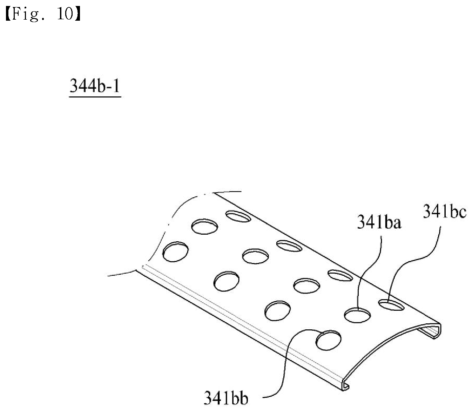

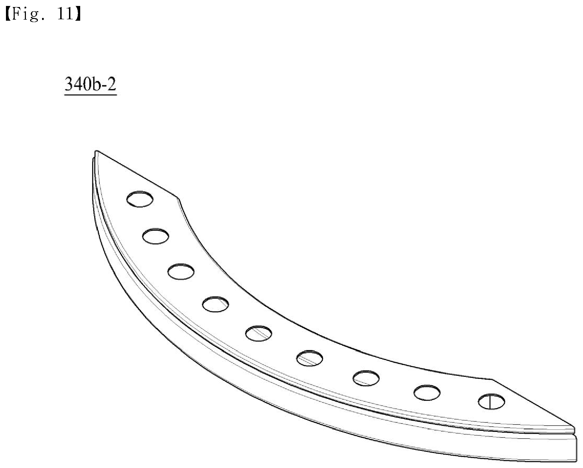

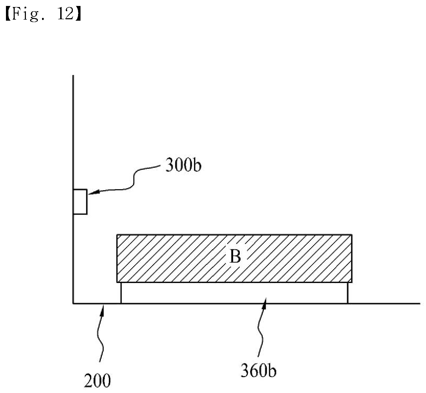

Figures 1 and 2 are drawings illustrating the configuration of a battery storage container according to an embodiment of the present invention; Figure 3 is a drawing illustrating the installation position of the discharge part of a battery storage container according to an embodiment of the present invention; Figure 4 is a drawing illustrating a variant of the arrangement of the discharge part in a battery storage container according to an embodiment of the present invention; Figure 5 is a drawing illustrating another variant of the arrangement of the discharge part in the battery storage container according to an embodiment of the present invention; Figure 6 is a drawing illustrating the configuration of the discharge part in the battery storage container according to an embodiment of the present invention; Figure 7 is a drawing illustrating the receiving member for the discharge part in a battery storage container according to an embodiment of the present invention; Figure 8 is a drawing illustrating an attachment member moving along a rail provided on the receiving member for the discharge part in a battery storage container according to an embodiment of the present invention; Figure 9 is a drawing illustrating a variant of the battery storage container according to an embodiment of the present invention, in which the receiving member of the ejection unit is divided into a duct and a cover; Figure 10 is a drawing illustrating through holes formed at different angles relative to the upper surface in the cover of Figure 9; Figure 11 is a drawing illustrating a modified example of a fixing member provided in the discharge part of a battery storage container according to an embodiment of the present invention, shaped to correspond to the surface to which it is attached; and Figure 12 is a drawing illustrating a storage member located on the lower surface of the battery in the discharge part of a battery storage container according to an embodiment of the present invention.

As shown in Figures 1 and 2, the battery storage container (10) according to an embodiment of the present invention, which has a rope-type discharge part, may generally include a cover part (100), a main body part (200), and a discharge part (300b).

Here, Figure 2, Figure 4 (to be described later), and Figure 5 (to be described later) depict only the frame of the cover part (100) to more easily explain the arrangement of the discharge part (300b), thereby allowing the sealed space formed by the combination of the first space of the cover part (100) and the second space of the main body part (200) to be identified.

As shown in the drawings, the cover part (100) may have a first space formed inside, and the first space may be arranged to face the second space of the main body part (200) described below.

The main body part (200) has a second space formed inside to accommodate a battery, and when combined with the aforementioned cover part (100), it can form a sealed space where the first space and the second space are merged.

In other words, the cover part (100) and the main body part (200) each have an internal space; after accommodating a battery in the space of the main body part (200), a cover can be placed on top of the cover part (100) to seal the internal space.

In this case, to enhance internal sealing strength, the main body part (200) forms the space for accommodating the battery by combining multiple bent steel plates, thereby minimizing the areas where multiple plates are joined via welding or fastening.

For example, a first steel plate and a second steel plate can each be bent into a "C" shape to form a bottom surface and side surfaces of the same configuration.

Here, when the bottom surface of the bent first steel plate is placed on the ground, the portion of the side facing the top of the first steel plate remains open. At this point, by positioning the bottom surface of the second steel plate-which has been bent into the same shape-against the bottom surface of the first steel plate so that a portion of the closed side of the second steel plate aligns with the open side of the first steel plate, and then joining them via welding or fastening, a main body part (200) with an open top can be formed.

Finally, a frame can be added to the gaps at the corners and welded or fastened to form a second space.

Furthermore, a space may be provided on the lower outer side of the main body part (200) to allow it to be securely hooked onto a transport device, such as the forks of a forklift, so that the transport vehicle can safely carry the battery storage container.

The cover part (100) may also form a first space by combining the main body part (200) with a plurality of bent steel plates.

Here, the discharge part (300b) discharges the fire extinguishing agent (310b) into the sealed space formed by the merger of the aforementioned first space and second space; the discharge part (300b) can discharge the fire extinguishing agent (310b) into the sealed space when a predetermined temperature is reached.

For example, to enable rapid fire suppression, it is desirable that, when the internal temperature of the battery reaches the design temperature, the fire extinguishing agent (310b) located inside the receiving member (320b) is released into the sealed space within seconds through the micro-holes (321ba) formed in the receiving member (320b), thereby extinguishing the fire.

Such a discharge part (300b) may be formed as a long rope extending in a direction and arranged along the perimeter of the sealed space.

When the discharge part (300b) is arranged along the lateral perimeter of the sealed space, it may be provided on the inner surface of the main body part (200) such that it is positioned at a predetermined height above the floor of the sealed space, as shown in Figure 1.

In this case, the predetermined height may vary depending on various environmental conditions or the shape of the batteries to be accommodated.

Furthermore, while the arrangement may vary depending on the battery stacking method within the sealed space-such as arranging the batteries in a puzzle-like pattern or stacking them in multiple layers- by positioning it at a height that is the preset distance higher than the upper surface of the battery accommodated in the main body part (200), relative to the lowest surface of the sealed space (i.e., the floor), the speed at which the fire extinguishing agent (310b) reaches the battery and the amount of fire extinguishing agent (310b) reaching the battery can be improved in the event of a fire.

In this case, the predetermined height may be greater than the height from the floor of the second space in the main body part (200) to the top surface of the battery (B), and less than the maximum height of the second space in the main body part (200).

Therefore, as shown in the drawings, when the fire extinguishing agent (310b) is discharged through the discharge part (300b) provided around the perimeter of the sealed space, the fire extinguishing agent (310b) can rapidly envelop the entire battery and quickly suppress the fire.

Furthermore, although not shown in the drawings, the predetermined height may be a height equal to or less than the height at which the bottom surface of the battery (B) is located relative to the bottom surface of the second space of the main body part (200).

Therefore, if a fire occurs at the bottom of the battery (B), it can be quickly extinguished.

For example, the lower surface of the battery (B) may be fixed to a support protruding a predetermined height from the floor of the second space of the main body part (200).

In this case, the ratio of the height of the support to the total height of the aforementioned second space may be 1:5.5.

Furthermore, the ratio of the height of the aforementioned support to the height of the battery may be in the range of 1:3.8 to 1:3.9.

As described above, the discharge part (300b) is also provided at the height where the bottom surface of the battery (B) is located within the second space, so that even if a fire occurs at the bottom of the battery, fire extinguishing agent (310b) can be rapidly discharged between the bottom surface of the sealed space and the bottom surface of the battery.

As shown in Figure 2, the discharge part (300b) comprises a plurality of unit members arranged at regular intervals along the inner perimeter of the main body part (200), thereby increasing the amount of fire extinguishing agent (310b) directed toward the battery.

For example, when the discharge part (300b) comprises a plurality of unit members provided along the perimeter of the inner surface of the main body part (200) and arranged at regular intervals on the inner surface of the main body part (200), a single unit member is provided at a first height, which is a height at or below the level of the lower surface of the battery (B) relative to the bottom surface of the second space of the main body part (200), along the perimeter of the inner surface of the main body part (200); and above that, another unit member is provided at a second height, which is a height at or above the distance from the bottom surface of the second space of the main body part (200) to the uppermost surface of the battery (B), and another unit member is provided at a second height, which is at or below the maximum height of the second space of the main body part (200), thereby improving fire extinguishing performance relative to the time required for the extinguishing agent to be discharged.

Furthermore, by arranging the aforementioned unit members at regular intervals on the inner surface of the main body part (200), the fire extinguishing agent (310b) reaches the battery at regular intervals, thereby improving suppression performance.

For example, a plurality of unit members may be provided at both the first height and the second height, and a plurality of them may also be arranged at regular intervals between the first height and the second height.

Furthermore, as shown in Figure 4, even if only a single unit member is arranged along the perimeter of the inner surface of the main body part (200), the discharge part (300b-1) falls within the scope of the present invention.

Furthermore, as shown in Figure 5, at least one discharge part (300b-2) may be provided on the bottom surface of the main body part (200) so that the fire extinguishing agent (310b) is discharged toward the battery housed in the main body part (200).

Additionally, at least one discharge part (300b-2) may be provided on a side of the first space of the cover part (100) so that the fire extinguishing agent (310b) is discharged toward the battery housed in the second space.

For example, the discharge part (300b-2) may be arranged at regular intervals on the bottom surface of the first space, which faces the top surface of the battery housed in the main body part (200).

At this point, the discharge part (300b) may be arranged at regular intervals on the bottom surface of the main body part (200), i.e., the bottom surface of the second space, at regular intervals; in this case, the discharge parts (300b) arranged on the bottom surfaces of the first and second spaces may be arranged at equal intervals so as to face each other relative to the battery, and may also be provided along the perimeter of the inner surface of the cover part (100).

Meanwhile, referring to Figure 6, the discharge part (300b) may specifically include a receiving member (320b) and a fire extinguishing agent (310b).

The receiving member (320b) is provided as a flexible, rope-shaped vinyl film (321b), and micro-holes (321ba) may be formed on the outer surface of the vinyl film (321b).

Furthermore, the fire extinguishing agent (310b) is contained in a solid state inside the receiving member (320b) and, when the sealed space reaches a predetermined temperature, is released into the sealed space through the micro-holes (321ba) of the receiving member (320b) within a few seconds, thereby reaching the battery.

The discharge part (300b) having the aforementioned configuration may further include a fixing member (340b) for fixing the receiving member (320b) at a predetermined position within the sealed space, as shown in Figure 7. For example, the fixing member (340b) may have a plurality of through holes (341b) formed in the longitudinal direction to allow the fire extinguishing agent (310b) discharged from the receiving member (320b) to pass through.

Furthermore, as shown in Figure 8, the fixing member (340b) may have a rail formed along its length, and the discharge part (300b) having the aforementioned configuration may further include an attachment member (350b). For example, since the attachment member (350b) is arranged to move along the rails and the receiving member (320b) is connected to one side of the attachment member (350b), the user can easily move the receiving member (320b) from one side to the other along the length of the fixing member (340b) and then position it.

Furthermore, to facilitate maintenance, as shown in Figure 9, the fixing member (340b-1) may include a duct (342b) attached to one surface of the sealed space, and a cover (344b) fixed to the duct (342b) and having a plurality of holes arranged therein.

Here, the cover (344b) may have a plurality of through holes (341b) formed therein, and as shown in Figure 9, through holes (341ba, 341bb, 341bc) having centerlines at different angles relative to the upper surface of the cover (344b) may be formed.

In other words, by forming through holes (341ba, 341bb, 341bc) with different angles relative to the upper surface of the cover (344b), the emission angles can be varied, and although not shown in the drawings, the cover (344b) may be configured to allow each through-hole (341a, 341b, 341c) to be opened or closed to set the emission position.

Furthermore, if the surface to be fixed is curved, the fixing member (340b-2) may be configured with a curvature corresponding to that of the surface, as shown in Figure 11, to ensure stable attachment; additionally, the fixing member (340b-2) may be designed with a flexible structure to conform to the shape of the surface to be fixed.

Moreover, as shown in Figure 12, the discharge part (300b) may further include a storage member (360b) for accommodating a receiving member (320b) containing the fire extinguishing agent (310b), and may be installed at the primary expected ignition point; for example, the storage member (360b) may be positioned to be in close contact with the lower surface of the battery, as shown in the drawing.

In this case, the storage member (360b) may be configured such that at least a portion of the area in contact with the battery has a mesh structure.

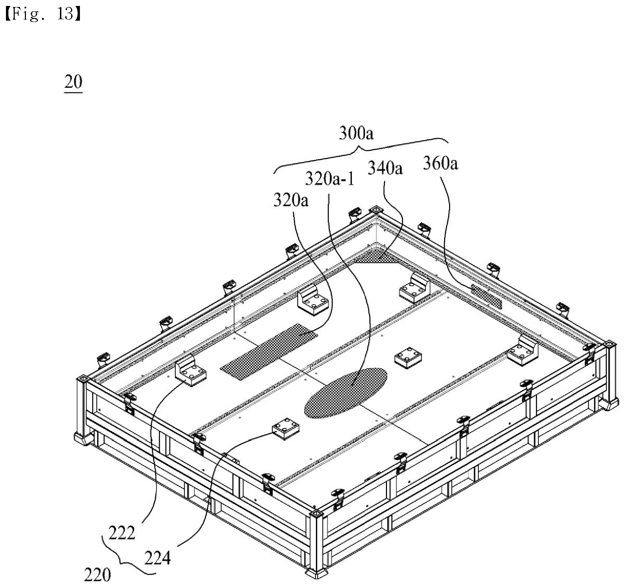

Next, with reference to Figures 13 through 18, the battery storage container (20) according to another embodiment of the present invention, which has a patch-type discharge part, will be described.

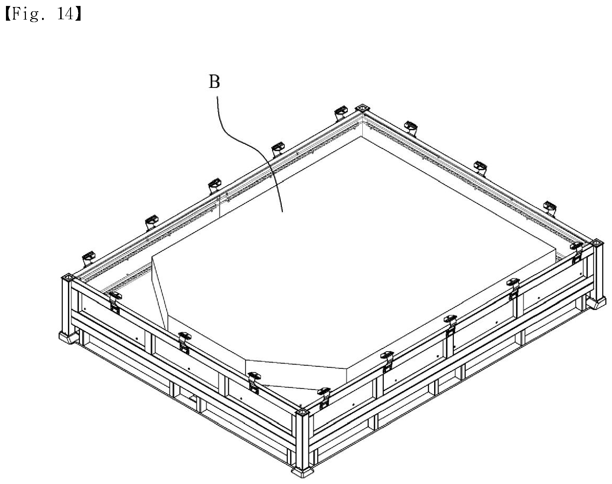

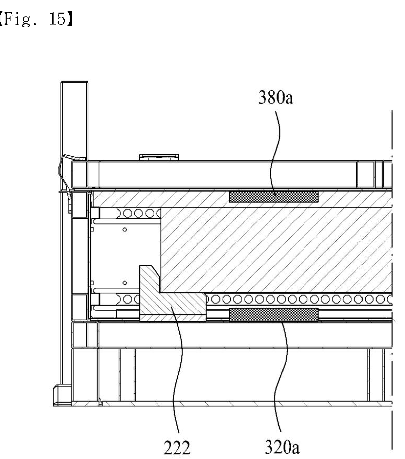

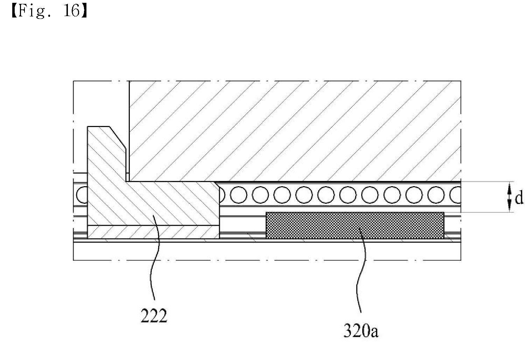

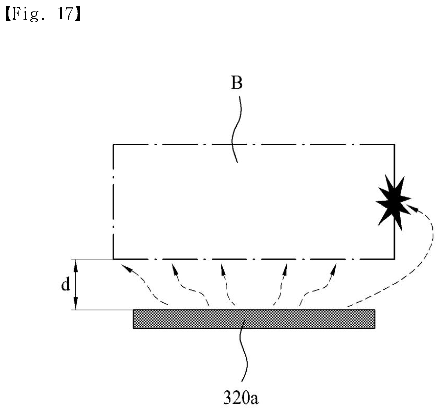

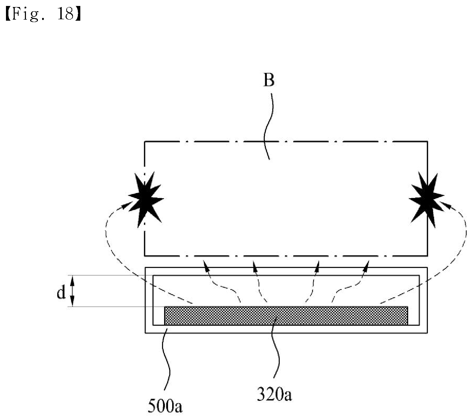

Figure 13 is a drawing illustrating the discharge part of a battery storage container according to another embodiment of the present invention; Figure 14 is a drawing illustrating an example of a battery accommodated in the main body part of a battery storage container according to another embodiment of the present invention; Figure 15 is a drawing illustrating a variant of the discharge part in a battery storage container according to another embodiment of the present invention; Figs. 16 and 17 are drawings illustrating the spacing of the discharge part relative to the battery in a battery storage container according to another embodiment of the present invention, and Fig. 18 is a drawing illustrating the storage part in a battery storage container according to another embodiment of the present invention.

To more easily explain the arrangement of the discharge part (300a), refer to Figure 13, which shows only the main body part (200). First, the battery storage container (20) according to another embodiment of the present invention may generally include a cover part (100), a main body part (200), and a discharge part (300a).

Here, since the cover part (100) and the main body part (200) are identical or similar to the cover part (100) and the main body part (200) described above in one embodiment of the present invention, their description is omitted, and only the other parts will be described.

The main body part (200) having the aforementioned configuration may further include a support bracket (220) so that the battery is accommodated in a spaced-apart manner from one side of the sealed space, as shown in Figure 13.

For example, the support bracket (220) may include a lower support bracket (222), an additional support bracket (224), a side support bracket, and a central support bracket. The lower support bracket (222) is fixed along the edges of the lower surface of the main body part (200) and may be configured as a step to accommodate the edges of the battery' s lower surface.

In other words, the lower support bracket (222) may be configured to contact a portion of the lower surface and a portion of the side surface of the battery.

Furthermore, the additional support bracket (224) may be positioned between the lower retaining members (222) as shown in the drawings, and may be configured to protrude upward from the lower surface of the main body part (200) such that its upper surface fully contacts the lower surface of the battery.

Furthermore, the side support bracket can secure the side of the battery so that, when multiple batteries are accommodated within a sealed space, they can be stably secured with spacing between them within the accommodation space.

Furthermore, when the side retaining members are provided, the support bracket (220) may additionally include central support brackets to assist in maintaining spacing between the batteries.

Furthermore, a space may be provided on the lower outer side of the main body part (200) to allow the battery storage container to be securely hooked onto a transport means, such as forks on a forklift or similar transport vehicle, enabling the transport vehicle to carry the battery storage container stably.

As described above, the discharge part (300a) discharges the fire extinguishing agent (310b) into a sealed space formed by the combination of the first and second spaces described above, and the discharge part (300a) can discharge the fire extinguishing agent (310b) into the sealed space when a predetermined temperature is reached.

For example, to enable rapid fire suppression, it is desirable that, when the internal temperature of the battery reaches the design temperature, the fire extinguishing agent located inside the receiving member is released into the sealed space through micro-holes formed in the receiving member within a few seconds, thereby suppressing the fire.

In another embodiment of the present invention, the discharge part (300a) may be formed in the form of a patch.

Specifically, the discharge part (300a) may be fixed in a patch-like form to at least one surface of the aforementioned sealed space, and the lower surface of the discharge part (300a) may be fixed to a surface of the sealed space such that a predetermined gap is maintained between a planar upper surface of the discharge part (300a) and a surface of the battery facing the upper surface of the discharge part (300a).

For example, the discharge part (300a) may include a lower patch (320a) located below the battery, as shown in Figure 14 described above.

Furthermore, provided that the upper surface of the discharge part (300a) has a planar shape, it falls within the scope of the present invention even if it is modified into the form of a circular patch (320a-1), as shown in Figure 13.

Furthermore, the discharge part (300a) may include a corner patch (340a) so that it can be positioned at a corner of the sealed space, as shown in Figure 13, and may also be fixed to the side of the sealed space in the form of a side patch (360a).

Furthermore, the discharge part (300a) may be fixed to the upper surface of the sealed space in the form of an upper patch (380a), as shown in Figure 15. When the discharge part (300a), fixed to the sealed space in the aforementioned patch form, has its lower surface fixed to one side of the sealed space, as shown in Figures 16 and 17, it can be fixed such that a predetermined distance (d) is maintained between a planar upper surface of the discharge part (300a) and a surface of the battery facing the upper surface of the discharge part (300a).

Taking the previously described lower patch (320a) form as an example, the receiving member of the lower patch (320a) has a facing surface opposite the battery-that is, the upper surface of the receiving member is flat-and micro-holes may be formed on the outer surface, including the facing surface.

In this case, the fire extinguishing agent is contained in a solid state inside the receiving member of the lower patch (320a) and can be released into the sealed space through the aforementioned micro-holes when the sealed space reaches a predetermined temperature.

In the case of a metal fire, when a certain temperature is reached during the fire, the internal pressure within the container increases, causing the container to rupture and allowing the fire extinguishing agent to be discharged toward the heat, hot air, and flames.

Since such metal fires-or Class D fires-come in many forms and are difficult to extinguish, and since the nature of the fire varies depending on the battery' s characteristics, the preset spacing (d) of the discharge part (300a) described above may vary; as shown in Figure 17, the preset spacing (d) of the discharge part (300a) can be determined based on the discharge distance and discharge time of the extinguishing agent, ensuring that the discharged agent can envelop the entire surface of the battery.

In other words, the preset spacing (d) of the discharge parts (300a) can be set by considering the fluidity and diffusion capability of the fire extinguishing agent; and if the discharge parts (300a) include both the lower patch (320a) and the upper patch (340a), the preset spacing (d) can be set so that the fire extinguishing agent reaches at least the sides of the battery.

Meanwhile, the arrangement of the discharge part (300a) may vary depending on the configuration of the batteries housed in the sealed space. For example, if multiple batteries are housed in the sealed space, multiple discharge parts (300a) may be provided, with a discharge part (300a) positioned for each battery (B).

Therefore, when there are multiple batteries (B), this prevents a situation where the preset spacing (d) between the battery (B) and the discharge part (300a) becomes too large.

Furthermore, the battery storage container (20) having the aforementioned configuration may further include a storage section (500a), as shown in Figure 18.

The storage part (500a) is configured as a polyhedron with at least one open side, is fixed within the sealed space, and the discharge part (300a) can be attached to its interior.

In this case, the open side may be configured to be openable and closable; a mesh screen may be formed on the open side; and it may be configured to be detachable from the sealed space to facilitate replacement of the discharge part (300a).

During replacement, maintenance will be further facilitated if the distance from the upper inner surface of the storage part (500a) to the upper surface of the discharge part (300a) is set to the predetermined distance (d) described above.

Below, we will examine a battery storage container (30) according to another embodiment of the present invention, in which the sealed portion (1300) is included in the configuration of the battery storage container (10, 20) described above or in another embodiment of the present invention.

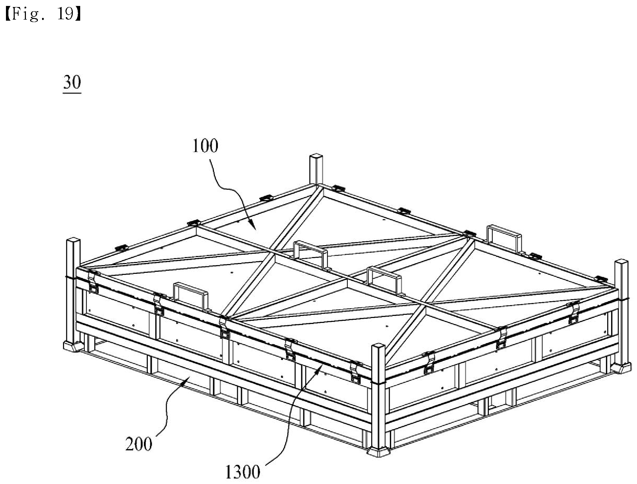

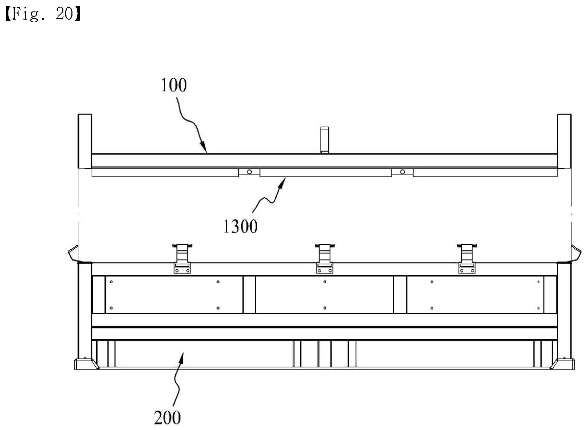

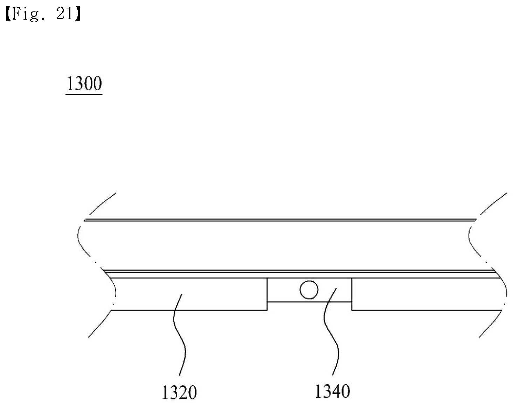

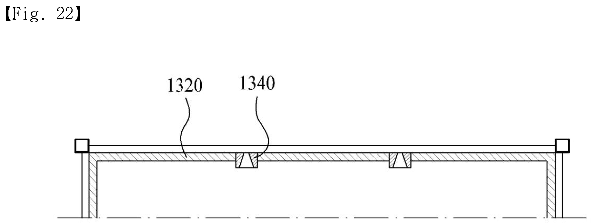

Figure 19 is a view showing the overall appearance of a battery storage container according to another embodiment of the present invention, Figure 20 is a drawing illustrating the assembly of a battery storage container according to another embodiment of the present invention; Figure 21 is a drawing illustrating the configuration of the sealing part in a battery storage container according to another embodiment of the present invention; and Figure 22 is a drawing showing a configuration in which a vent member is provided between packing members in a battery storage container according to another embodiment of the present invention.

A battery storage container (30) according to another embodiment of the present invention, comprising the aforementioned cover part (100), main body part (200), and discharge part (300b or 300a), may further include a sealing part (1300).

In this case, the cover part (100) may be configured as a rectangular shape with a major axis and a minor axis perpendicular thereto, and a hooking member for transporting the battery storage container (30) may be provided on the upper portion of the cover part (100).

The shape and material of the hooking member may vary as long as it can be securely hooked onto a transport means, such as the forks of a forklift, allowing the transport vehicle to carry the battery storage container (30) stably; it goes without saying that the scope of the present invention is not limited thereby.

However, for the sake of a more detailed explanation, taking the case where the transport vehicle is a forklift as an example, the hooking member may be bent into a "C" shape and attached to the upper portion of the cover part (100), thereby allowing the forklift tines to be inserted between the hooking member and the upper portion of the cover part (100).

Furthermore, the battery described in the present invention may be a rechargeable secondary battery and may be any one of a lead-acid battery, a nickel-cadmium battery, a nickel-metal hydride battery, or a lithium-ion battery.

Preferably, the battery referred to in the present invention may be a lithium-ion battery.

In this case, the hooking members may be arranged at predetermined intervals along the major axis of the cover part (100). For example, as shown in Figure 19, the major axis may be divided into two regions, with a plurality of hooking members arranged in one region in the direction into which the forklift tines are inserted, and another plurality of hooking members arranged in the same direction in the other region.

The main body part (200) is configured to accommodate a battery internally, as described above, and can be coupled with the aforementioned cover part (100).

Next, referring to Figures 20 and 21, the sealing part (1300) is described in detail as follows.

Specifically, the sealing part (1300) may include a packing member (1320) and a vent member (1340).

The packing member (1320) is provided between the cover part (100) and the main body part member (200), as shown in the drawings, and can seal the space between them when the cover part (100) is coupled to the main body part (200).

The packing member (1320) may be coupled to either the cover part (100) or the main body part (200), and since it performs a sealing function, it goes without saying that the scope of the present invention is not limited by whether it is coupled to the cover part (100) or the main body part (200).

However, for a more detailed explanation, referring to Figure 22, the packing member (1320) includes a plurality of unit packings arranged at predetermined intervals along the lower edge of the cover part (100), and the vent member (1340) may be provided between adjacent unit packings.

In this case, the packing member (1320) may be made of a material such as Teflon, possessing high tensile strength and elasticity, and configured to withstand compressive loads between the cover part (100) and the main body part (200).

Furthermore, the packing member (1320) is formed higher than the vent member (1340) relative to the surface that bonds to the cover part (100) or the main body part (200), even if compressed by the cover part (100) and the main body part (200), the load from the cover part (100) or the main body part (200) may not be transmitted to the vent member (1340).

The vent member (1340) can serve to discharge air to the outside when the internal pressure of the space accommodating the battery exceeds a preset pressure.

The vent member (1340) is provided between portions of the packing member (1320) as described above, and a flow path that narrows in one direction may be formed. For example, the vent member (1340) may be configured such that its width narrows from the outlet toward the inlet due to the formation of an inclined surface.

In this case, the vent member (1340) may be configured to open under predetermined conditions while at least one of the inlet and outlet is sealed, and the predetermined conditions may be the internal pressure of the main body part (200) in which the battery is housed.

The sealing part (1300) may be configured to open under the predetermined pressure condition as described above; alternatively, the sealing part (1300) may be configured to open at the user' s discretion while the flow path remains sealed.

For example, the sealing part (1300) may further include a pressurizing member that opens the inlet, which is in a sealed state, in response to an electrical signal, and by providing a button electrically connected to the main body part (200) or the cover part (100), the user may press the button to actuate the pressurizing member, thereby causing the inlet to be opened by the pressurizing member.

Finally, we will examine the battery storage container (40) according to another embodiment of the present invention, in which a vent part (2300) is included in the configuration of the battery storage container (10, 20) according to the aforementioned embodiment or other embodiments of the present invention.

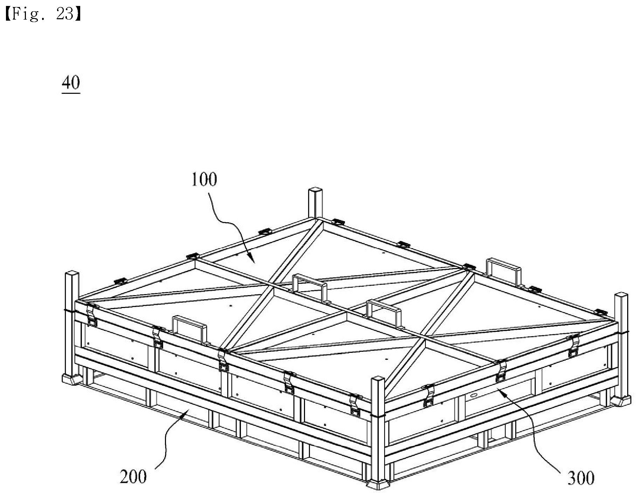

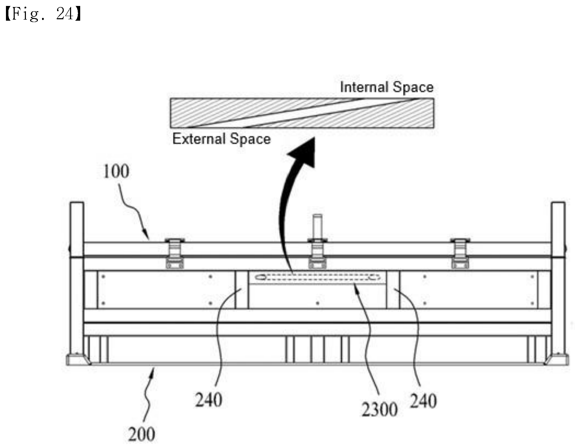

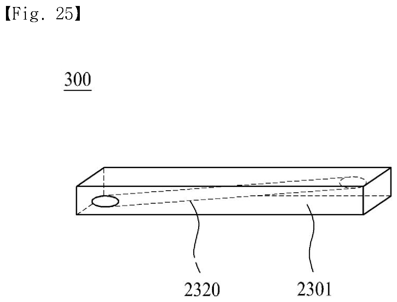

Figure 23 is a view illustrating the overall appearance of a battery storage container according to another embodiment of the present invention; Figure 24 is a view illustrating the side view of a battery storage container according to another embodiment of the present invention; and Figure 25 is a view illustrating the vent part of a battery storage container according to another embodiment of the present invention.

The battery storage container (40) according to another embodiment of the present invention, which includes the aforementioned cover part (100), main body part (200), and discharge part (300b or 300a), may further include a vent part (2300).

Here, since the cover part (100), main body part (200), and discharge part (300b or 300a) are the same as described above, they are assigned the same reference numbers, and only the other parts will be described.

The main body part (200) may have an exhaust hole formed on one side to discharge air to the outside, and may be in communication with the vent part (2300), which will be described later, through the exhaust hole.

As described above, the vent part (2300) may be connected to the main body part (200) so that air can be discharged to the outside when the internal pressure of the main body part (200) increases.

Specifically, the vent part (2300) may include a body (2301) and a vent channel (2320).

The body (2301) is configured such that one of its faces abuts the main body part (200) and may have a shape that is elongated in one direction. For example, the body (2301) may be configured as a rectangular shape formed to be elongated in one direction, as shown in the drawings.

In this case, the vent channel (2320) may be arranged to penetrate the body (2301) in a diagonal direction relative to the longitudinal direction of the body (2301) described above.

In other words, assuming a virtual reference axis is formed along the longitudinal direction of the body (2301), the longitudinal axis of the vent channel (2320) may have a direction different from that of the aforementioned virtual reference axis.

Therefore, even if the length of the vent channel (2320) increases, there is the advantage that the shape of the body (2301) can be formed such that the width perpendicular to the longitudinal direction of the body (2301) remains constant, provided that only the angle within the body (2301) is adjusted relative to the aforementioned imaginary reference axis.

In this case, the vent channel (2320) may communicate with the discharge hole formed in the aforementioned main body part (200) on one side of the body (2301) that faces the main body part (200).

Specifically, the vent channel (2320) has an inlet formed at one end and an outlet formed at the other end in the longitudinal direction, allowing the internal air of the main body part (200) to be discharged through the aforementioned discharge hole of the main body part (200), and can be drawn into the inlet formed on the first surface of the body (2301) facing the main body part (200) and discharged through the outlet formed on the second surface of the body (2301), which is different from the first surface.

Here, assuming that the first surface of the body (2301) is the surface facing the main body part (200), the second surface of the body (2301) may be the opposite side of the body (2301) in the width direction of the body (2301) relative to the aforementioned first surface.

To improve the air discharge velocity, protrusions may be formed inside the vent channel (2320); in this case, the protrusions may taper in width toward the direction of protrusion to form tips, and multiple protrusions may be arranged along the length of the vent channel (2320).

The distance between the tips of the aforementioned projections may be set to prevent the vortices formed by the projections from being drawn in, thereby further improving the air discharge velocity.

Such a vent channel (2320) may be configured to open according to predetermined conditions while at least one of the aforementioned inlet and outlet is sealed; in this case, the predetermined condition may be the internal pressure of the main body part (200) housing the battery.

For example, the vent channel (2320) may have a membrane formed at the outlet or inlet, so that the vent channel (2320) is initially closed; however, when the internal pressure of the main body part (200) rises above a predetermined pressure, the internal air tears and penetrates through the membrane at the outlet or inlet, allowing the internal air of the main body part (200) to be discharged through the vent channel (2320) to the outside of the main body part (200).

The vent channel (2320) having the configuration described above may further include a pressurizing member that opens the sealed inlet in response to an electrical signal, thereby allowing it to be opened at the user' s discretion.

We have examined a preferred embodiment of the invention, and it will be apparent to those skilled in the art that the invention may be embodied in other specific forms without departing from its spirit or scope beyond the embodiments described above.

Therefore, the above-described embodiments should be considered illustrative rather than limiting, and accordingly, the present invention is not limited to the above description but may be modified within the scope of the appended claims and their equivalents.

Specifically, even if battery storage containers (30, 40) according to another embodiment of the present invention described above are combined to include both a sealing part (1300) and a vent part (2300), they would all fall within the scope of the present invention.

## Claims

1. A battery storage container, comprising: a cover part having a first space formed therein; a main body part having a second space formed therein for accommodating a battery, the main body part being coupled to the cover part to form a sealed space in which the first space and the second space are merged; and a discharge part configured to discharge a fire extinguishing agent into the sealed space at a predetermined temperature,
wherein the discharge part is formed in a shape of a rope elongated in one direction and is arranged along a perimeter of the sealed space, or is fixed in a form of a patch on at least one surface of the sealed space.

2. A battery storage container according to Claim 1, wherein, when the discharge part is formed in the shape of a rope elongated in one direction and arranged along the perimeter of the sealed space, the discharge part is arranged along the inner perimeter of the sealed space at a predetermined height from a bottom surface of the sealed space.

3. A battery storage container according to Claim 2, wherein the predetermined height is at least the height from the bottom surface of the second space in the main body part to the uppermost surface of the battery seated in the second space, and is no greater than the maximum height of the second space in the main body part.

4. A battery storage container according to Claim 2, wherein the discharge part comprises a plurality of unit members provided along the perimeter of the inner surface of the main body part, arranged at regular intervals on the inner surface of the main body part.

5. A battery storage container according to Claim 1, wherein, when the discharge part is formed in the shape of a rope elongated in one direction and is provided along the perimeter of the sealed space, at least one discharge part is provided on the bottom surface of the main body part so that the fire extinguishing agent is discharged toward the battery housed in the main body part.

6. A battery storage container according to Claim 1, wherein, when the discharge part is formed in the shape of a rope elongated in one direction and arranged along the perimeter of the sealed space, at least one of the discharge part is provided on one side of the first space of the cover part so that the fire extinguishing agent is discharged toward the battery housed in the second space.

7. A battery storage container according to Claim 6, wherein the discharge part is arranged at regular intervals on the bottom surface of the first space facing the upper surface of the battery housed in the main body part.

8. A battery storage container according to Claim 7, wherein the discharge part is provided along the perimeter of the inner surface of the cover part.

9. A battery storage container according to Claim 1, wherein, when the discharge part is formed in a shape of a rope elongated in one direction and is provided along the perimeter of the sealed space, the discharge part comprises: a receiving member formed in a shape of a flexible rope, with micro-holes formed on an outer surface thereof; and a fire extinguishing agent that is contained in a solid state within the receiving member and is released into the sealed space through the micro-holes when the sealed space reaches a predetermined temperature.

10. A battery storage container according to Claim 9, wherein the discharge part further comprises a fixing member for fixing the receiving member to a predetermined position within the sealed space.

11. A battery storage container according to Claim 10, wherein the fixing member is formed with a plurality of through holes in the longitudinal direction through which the fire extinguishing agent discharged from the receiving member travels.

12. A battery storage container according to Claim 1, wherein, when the discharge part is fixed in a patch-like form to at least one surface of the sealed space, the lower surface of the discharge part is fixed to a surface of the sealed space such that a predetermined gap is maintained between a planar upper surface of the discharge part and a surface of the battery facing the upper surface of the discharge part.

13. A battery storage container according to Claim 12, wherein the discharge part comprises: a receiving member having a facing surface facing the battery, the facing surface being planar, with micro-holes formed on an outer surface thereof including said facing surface; and a fire extinguishing agent that is contained in a solid state within the receiving member and is released into the sealed space through the micro-holes when the sealed space reaches a predetermined temperature.

14. A battery storage container according to Claim 13, wherein the predetermined spacing is determined based on the discharge distance and discharge time of the fire extinguishing agent so that the discharged fire extinguishing agent envelops the entire surface of the battery.

15. A battery storage container according to Claim 1, wherein the cover part is configured as a rectangular shape and the battery storage container further comprises a sealing part that seals between the cover part and the main body part, wherein the sealing part discharges internal air to the outside at a portion thereof.

16. A battery storage container according to Claim 15, wherein the sealing part comprises a packing member provided between the cover part and the main body part; and a vent member in which a flow path narrowing in width in one direction is formed between portions of the packing member.

17. A battery storage container according to Claim 16, wherein the vent member is configured to open according to a predetermined condition while at least one of an inlet and an outlet is sealed, wherein the predetermined condition is the internal pressure of the main body part in which the battery is housed.

18. A battery storage container according to Claim 1, wherein the cover part is configured as a rectangular shape and the battery storage container further comprises a vent part arranged to communicate with the main body part to discharge the internal air of the main body part to the outside.

19. A battery storage container according to Claim 18, wherein the vent part comprises a body formed elongated in one direction with one side facing the main body part; and a vent channel penetrating the body diagonally relative to the longitudinal direction of the body.

20. A battery storage container according to Claim 19, wherein the vent channel communicates with an exhaust hole formed in the main body part from one side of the body that faces the main body part, wherein the internal air of the main body part flows into an inlet formed on a first surface of the body that faces the main body part and is discharged through an outlet formed on a second surface of the body that is different from the first surface.
